# EUROPEAN PATENT APPLICATION

(11) **EP 4 501 132 A1**
(43) Date of publication of application: **05.02.2025**
(21) Application number: 23780891.0
(22) Date of filing: 30.03.2023
(51) Int. Cl.: A23L 19/00, A23L 5/00

(54) **COLOR-FADING INHIBITOR FOR CHLOROPHYLL-CONTAINING FOOD, METHOD FOR INHIBITING COLOR FADING OF CHLOROPHYLL-CONTAINING FOOD, AND PRODUCTION METHOD FOR PROCESSED PRODUCTS OF CHLOROPHYLL-CONTAINING FOOD IN WHICH COLOR FADING IS INHIBITED**

(30) Priority: 31.03.2022 JP 2022060753
(71) Applicant: AJINOMOTO CO., INC., Chuo-ku Tokyo 104-8315 (JP)
(72) Inventor: KAWATAKE, Noriyoshi, Kawasaki-shi, Kanagawa 210-8681 (JP); TODA, Hajime, Kawasaki-shi, Kanagawa 210-8681 (JP); NINOMIYA, Shoko, Kawasaki-shi, Kanagawa 210-8681 (JP); SATO, Sumie, Kawasaki-shi, Kanagawa 210-8681 (JP); YAMAMOTO, Yukio, Kawasaki-shi, Kanagawa 210-8681 (JP)
(74) Representative: Strehl Schübel-Hopf & Partner
(86) International application number: PCT/JP2023/013206
(87) International publication number: WO 2023/190883

(57) **Abstract**

The present invention relates to a color fading inhibitor for chlorophyll-containing foods,which is a color fading inhibitor for processing involving heating under acidic to neutral conditions or processing under acidic conditions, which characteristically contains arginine or a salt thereof.

The color fading inhibitor for chlorophyll-containing foods of the present invention can also be used in cases in which heat treatment under alkaline conditions is not suitable in processing involving heating, and for processing under acidic conditions that does not involve heating.

The present invention also provides a method for inhibiting color fading of chlorophyll-containing foods, and further, a production method of processed products of chlorophyll-containing foods in which color fading is inhibited.

## Description

### [Technical Field]

The present invention relates to a color fading inhibitor capable of inhibiting color fading of chlorophyll-containing foods when subjected to heat treatment, cooking, and other processing involving heating, or processing under acidic conditions that does not involve heating, such as pickling, a method for inhibiting color fading of chlorophyll-containing foods, and a production method of processed products of chlorophyll-containing foods in which color fading is inhibited.

### [Background Art]

It is known that when green vegetables are processed by heating or pickling, the magnesium in the chlorophyll contained in the vegetables is replaced by hydrogen to form yellowish-brown pheophytin, causing the green color to fade. It is said that such change easily occurs when the pH is not more than 6.3 or the temperature is not less than 80°C.

As a method for preventing such color fading of green vegetables during processing, a method has been proposed in which basic amino acids or oligopeptides containing basic amino acids as main components are added to the green vegetables and then heat-treated. It has been disclosed that this method has the effect of inhibiting color fading by neutralizing the acidic environment of the green vegetables and creating an alkaline environment (Patent Literature 1).

In addition, in order to prevent color fading of green vegetables added to the base materials of paste products, it has been proposed to add alkaline salts such as sodium carbonate and sodium bicarbonate, or basic amino acids such as arginine, to maintain the pH atmosphere of the paste product base materials at 6.8 to 7.4 (Patent Literature 2).

Furthermore, a method for processing green vegetables used in boxed lunch, daily dish and the like is disclosed in which the green vegetables are immersed in an alkaline aqueous solution having a pH of 7.5 or more, preferably 9 to 11, and then heated in hot water or steam to inhibit color fading of the green vegetables, and then immersed in an aqueous solution of a substance having bacteriostatic action or sprayed with the said aqueous solution (Patent Literature 3).

However, the techniques disclosed in Patent Literatures 1 to 3 all involve heat treatment of green vegetables under alkaline conditions, and cannot be applied to cases in which heat treatment under alkaline conditions is not suitable during processing, or to processing under acidic conditions that does not involve heating, such as pickling.

Therefore, there has been a demand for a color fading inhibitor for green vegetables and a method for inhibiting color fading of green vegetables that can be used in processing involving heating when heat treatment under alkaline conditions is not suitable, or in processing under acidic conditions such as pickling.

In addition, a method for restoring the green color of chlorophyll-containing foods such as wild plants and green vegetables that have turned brown due to processing, or for maintaining the green color of such foods during processing, has been disclosed in which the aforementioned foods are contacted with a liquid containing yeast that contains metal such as zinc, iron, magnesium, and the like (Patent Literature 4) .

However, the technique described in Patent Literature 4 sometimes fails to achieve sufficient effects depending on the kind of chlorophyll-containing food or the processing method, and may require a process to remove metal ions attached to the surface of the food. Thus, it is not always a simple and effective method.

### [Citation List]

### [Patent Literature]

[Patent Literature 1]
   JP 2003-210130 A
[Patent Literature 2]
   JP H08-051951 A
[Patent Literature 3]
   JP 2006-296325 A
[Patent Literature 4]
   JP 2004-067546 A

### [Summary of Invention]

### [Technical Problem]

Therefore, the present invention aims to provide a color fading inhibitor for chlorophyll-containing foods, which can also be used in processing involving heating where heat treatment under alkaline conditions is not suitable, or processing under acidic conditions such as pickling, and a method for inhibiting color fading of chlorophyll-containing foods, which can also be applied to processing involving heating where heat treatment under alkaline conditions is not suitable, or processing under acidic conditions such as pickling. Furthermore, the present invention aims to provide a method for producing processed products of chlorophyll-containing foods in which color fading is inhibited.

### [Solution to Problem]

The present inventors have conducted intensive studies in an attempt to solve the above-mentioned problems and found that, by using arginine or a salt thereof as an active ingredient of a color fading inhibitor for chlorophyll-containing foods in processing involving heating or processing under acidic conditions of the aforementioned foods, color fading of chlorophyll-containing foods can be inhibited well even when a heat treatment under acidic to neutral conditions is performed or a processing treatment that does not involve heating is performed under acidic conditions. They have conducted further studies and completed the present invention.

That is, the present invention relates to the following.
[1] A color fading inhibitor for chlorophyll-containing foods, which color fading inhibitor is for processing involving heating under acidic to neutral conditions or processing under acidic conditions that does not involve heating, and comprises arginine or a salt thereof.
[2] The color fading inhibitor of [1], which is added to water or a seasoning liquid used when heating chlorophyll-containing foods, or a treatment liquid used when pretreating chlorophyll-containing foods prior to heating, or a treatment liquid or a seasoning liquid used when processing under acidic conditions that does not involve heating.
[3] The color fading inhibitor of [2], wherein arginine or a salt thereof is added to water or a seasoning liquid used when heating chlorophyll-containing foods, or a treatment liquid used when pretreating chlorophyll-containing foods prior to heating, such that the content thereof is 0.01 wt% or more and 1 wt% or less.
[4] The color fading inhibitor of [2], wherein arginine or a salt thereof is added to a treatment liquid or a seasoning liquid used when processing under acidic conditions that does not involve heating, such that the content thereof is 0.01 wt% or more and 11 wt% or less.
[5] A method for inhibiting color fading of a chlorophyll-containing food when processing involving heating under acidic to neutral conditions is performed or processing under acidic conditions that does not involve heating is performed, comprising contacting a solution containing arginine or a salt thereof with the chlorophyll-containing food.
[6] The inhibiting method of [5], wherein the solution containing arginine or a salt thereof is prepared by adding and dissolving arginine or a salt thereof in water or a seasoning liquid used when heating chlorophyll-containing foods, or a treatment liquid used when pretreating chlorophyll-containing foods prior to heating at 0.01 wt% or more and 1 wt% or less.
[7] The inhibiting method of [5], wherein the solution containing arginine or a salt thereof is prepared by adding and dissolving arginine or a salt thereof in a treatment liquid or a seasoning liquid used when processing under acidic conditions that does not involve heating at 0.01 wt% or more and 11 wt% or less.
[8] The inhibiting method of [5] or [6], wherein the processing involving heating is performed with the solution containing arginine or a salt thereof in contact with the chlorophyll-containing food.
[9] The inhibiting method of [5] or [7], wherein the processing under acidic conditions that does not involve heating is performed with the solution containing arginine or a salt thereof in contact with the chlorophyll-containing food.
[10] A method for producing a processed product of a chlorophyll-containing food in which color fading is inhibited, comprising contacting a solution containing arginine or a salt thereof with the chlorophyll-containing food and subjecting the aforementioned chlorophyll-containing food to processing involving heating under acidic to neutral conditions or processing under acidic conditions that does not involve heating.
[11] The production method of [10], wherein the solution containing arginine or a salt thereof is prepared by adding and dissolving arginine or a salt thereof in water or a seasoning liquid used when heating chlorophyll-containing foods, or a treatment liquid used when pretreating chlorophyll-containing foods prior to heating at 0.01 wt% or more and 1 wt% or less.
[12] The production method of [10], wherein the solution containing arginine or a salt thereof is prepared by adding and dissolving arginine or a salt thereof in a treatment liquid or a seasoning liquid used when processing under acidic conditions that does not involve heating at 0.01 wt% or more and 11 wt% or less.
[13] The production method of [10] or [11], wherein the solution containing arginine or a salt thereof is subjected to the processing involving heating under acidic to neutral conditions while in contact with the chlorophyll-containing food.
[14] The production method of [10] or [12], wherein the solution containing arginine or a salt thereof is subjected to the processing under acidic conditions that does not involve heating while in contact with the chlorophyll-containing food.

### [Advantageous Effects of Invention]

The present invention can provide a color fading inhibitor for chlorophyll-containing foods which can also be used in cases in which heat treatment under alkaline conditions is not suitable in processing involving heating, and for processing under acidic conditions such as pickling and the like.

Also, the present invention can provide a method for inhibiting color fading of chlorophyll-containing foods, that can be applied to cases in which heat treatment under alkaline conditions is not suitable, or processing under acidic conditions such as pickling and the like.

Furthermore, the present invention can provide a method for producing a processed product of a chlorophyll-containing food in which color fading is inhibited.

The present invention can inhibit color fading of chlorophyll-containing foods well even when processing involving heating under acidic to neutral conditions or processing under acidic conditions that does not involve heating is performed, and can provide a chlorophyll-containing food that retains a bright green color, and a processed product thereof.

Furthermore, in a processed product of a chlorophyll-containing food provided by the present invention, color fading due to light exposure during storage can be inhibited well.

### [Description of Embodiments]

The present invention provides a color fading inhibitor for foods containing chlorophyll (hereinafter also referred to as "chlorophyll-containing foods" in the present specification), which is used for processing involving heating under acidic to neutral conditions or for processing under acidic conditions that does not involve heating (hereinafter also referred to as "color fading inhibitor of the present invention" in the present specification).

In one embodiment of the present invention, "processing involving heating under acidic to neutral conditions" refers to processing with heating under conditions in which the pH of water, seasoning liquid, or treatment liquid described below is 7.5 or less at 25°C, or processing with heating under conditions in which the pH of the squeezed juice or extract of a chlorophyll-containing food or a diluted solution thereof is 7.5 or less at 25°C. In another embodiment of the present invention, "processing involving heating under acidic to neutral conditions" refers to processing involving heating under conditions in which the pH of water, seasoning liquid, or treatment liquid described below is less than 8 at 25°C, or processing involving heating under conditions in which the pH of the squeezed juice or extract of a chlorophyll-containing food or a diluted solution thereof is less than 8 at 25°C.

In the present invention, "processing under acidic conditions that does not involve heating" refers to processing without heating under conditions in which the pH of the treatment liquid or seasoning liquid described below at 25°C is less than 7.

The pH of the water or seasoning liquid or treatment liquid described below at 25°C can be measured by a general pH measurement method, such as the glass electrode method and the like.

The color fading inhibitor of the present invention contains arginine or a salt thereof as an active ingredient.

Arginine (2-amino-5-guanidinopentanoic acid), which is contained as an active ingredient in the color fading inhibitor of the present invention, is a naturally occurring basic amino acid that constitutes proteins and is found in high concentrations in nuclear proteins such as histone and protamine. In foods, it is found in large amounts in meat, nuts, soybean, brown rice, raisin, shrimp, milk, and the like.

In the present invention, any of L-form, D-form, and DL-form of arginine can be used, but L-form and DL-form are preferred, and L- form is more preferred.

Also, arginine can be used not only in a free form but also in the form of a salt. Specific examples of arginine salts include salts with inorganic bases, organic bases, inorganic acids, and organic acids, and salts with amino acids.

Examples of the salts with inorganic bases include salts with alkali metals such as lithium, sodium, and potassium, salts with alkaline earth metals such as magnesium and calcium, and ammonium salts.

Examples of the salts with organic bases include salts with alkanolamines such as monoethanolamine, diethanolamine, and triethanolamine, and salts with heterocyclic amines such as morpholine and piperidine.

Examples of the salts with inorganic acids include salts with hydrohalic acids (hydrochloric acid, hydrobromic acid, hydroiodic acid, etc.), sulfuric acid, nitric acid, phosphoric acid, and the like.

Examples of the salts with organic acids include salts with monocarboxylic acids such as formic acid, acetic acid, and propanoic acid; salts with saturated dicarboxylic acids such as oxalic acid, malonic acid, malic acid, and succinic acid; salts with unsaturated dicarboxylic acids such as maleic acid and fumaric acid; salts with tricarboxylic acids such as citric acid; and salts with keto acids such as α-ketoglutaric acid.

Examples of the salts with amino acids include salts with aliphatic amino acids such as glycine and alanine; salts with aromatic amino acids such as phenylalanine; salts with basic amino acids such as lysine; salts with acidic amino acids such as aspartic acid and glutamic acid; and salts with amino acids that form lactams such as pyroglutamic acid.

In the color fading inhibitor of the present invention, one kind of arginine and a salt thereof may be selected and used alone, or two or more kinds thereof may be selected and used in combination.

For the purposes of the present invention, it is preferable to use arginine in a free form or hydrochloride thereof, and it is more preferable to use arginine in a free form.

In the present invention, arginine and a salt thereof may be extracted and purified from naturally occurring animals and plants, or may be obtained by chemical synthesis method, fermentation method, enzymatic or recombinant methods, or may be commercially available products provided by various companies.

The color fading inhibitor of the present invention is suitable for use in processing involving heating under acidic to neutral conditions, or processing under acidic conditions that does not involve heating.

"Processing involving heating under acidic to neutral conditions" include processing that involves heating without the use of alkaline substances such as sodium hydrogen carbonate and the like. The embodiment of "heating" in such processing is not particularly limited, and includes heating under normal pressure such as boiling, simmering, steaming, baking, stir-frying, and deep-frying, and heating under pressure (retort).

Examples include pretreatment of chlorophyll-containing foods such as blanching or parboiling green vegetables, freeze-drying or freezing pretreated chlorophyll-containing foods, cooking chlorophyll-containing foods that have been in contact with an acidic to neutral treatment liquid (boiling, simmering, steaming, baking, stir-frying, deep-frying, etc.), cooking such as simmered dishes using acidic to neutral seasoning liquids, and freezing the aforementioned cooked foods.

Other examples include drying with hot air chlorophyll-containing foods that have been in contact with an acidic to neutral treatment liquid, and sterilization treatment at high temperatures.

Furthermore, examples of "processing under acidic conditions that does not involve heating" include sterilization and washing of chlorophyll-containing foods with acidic aqueous solutions, and cooking with acidic seasoning liquids such as pickles, vinegared dishes, salads, and marinades.

The content of arginine or a salt thereof in the color fading inhibitor of the present invention is set as an amount that can be added to the water or seasoning liquid used in heating chlorophyll-containing foods in processing involving heating under acidic to neutral conditions, or to the treatment liquid used in pretreating chlorophyll-containing foods prior to heating, or to the treatment liquid or seasoning liquid used in processing under acidic conditions that does not involve heating, resulting in the content described below.

The color fading inhibitor of the present invention can be made into a solid form such as powder, granules, or tablet, a semi-solid form such as cream or paste, or a liquid form such as solution, emulsion, suspension, or dispersion, by adding general additives used in formulation or general additives used in food manufacturing, water, and the like to arginine or a salt thereof as necessary and within the scope that does not impair the characteristics of the present invention.

The above-mentioned general additives or additives include excipient (e.g., magnesium carbonate, sugars (glucose, lactose, corn starch, etc.), sugar alcohol (sorbitol, mannitol, etc.) etc.), binder (e.g., gelatin, pregelatinized starch, partially pregelatinized starch, cellulose and a derivative thereof (crystalline cellulose, hydroxypropyl cellulose, etc.) etc.), disintegrant (e.g., crospovidone, povidone, crystalline cellulose, etc.), lubricant (e.g., talc, magnesium stearate, etc.), thickening stabilizer (xanthan gum, sodium carboxymethyl cellulose, etc.), emulsifier (glycerol fatty acid ester, sucrose fatty acid ester, saponin, lecithin, etc.), pH adjuster (hydrochloric acid, phosphoric acid, citric acid, sodium dihydrogen phosphate, sodium citrate, etc.), preservative (benzoic acid, sodium benzoate, sorbic acid, potassium sorbate, ε-polylysine, etc.), antioxidant (ascorbic acid, erythorbic acid, catechin, etc.), sweetener (aspartame, acesulfame potassium, licorice extract, etc.), acidulant (citric acid, acetic acid, tartaric acid, etc.), bittering agent (caffeine, naringin, wormwood extract, etc.), seasoning (sugar, sodium chloride, soy sauce, sweet cooking rice wine, fermented soybean paste, sodium L-glutamate, etc.), stocks (kombu-seaweed stock, bonito stock, mackerel stock, dried sardine stock, etc.), extracts (sea food extract, meat of domesticated animals extract, vegetable extract, seaweed extract, yeast extract, etc.), colorant (annatto dye, turmeric dye, gardenia dye, etc.), flavor (synthetic flavors such as ethyl acetoacetate, anise aldehyde, and the like, natural flavors such as spice extract, laurel, and the like) and the like, and one or more of them can be used, and the amount of each additive can be set according to the usual amount of additives.

The water to be used may be any suitable water for food manufacturing, purified water such as distilled water, ion-exchanged water, tap water, and the like.

The color fading inhibitor of the present invention may be produced in accordance with the form of the agent, according to general formulating means, such as the methods described in the Japanese Pharmacopoeia XVIII General Rules for preparations [3] Monographs for Preparations and the like.

The color fading inhibitor of the present invention may be added to water or seasoning liquid used when heating chlorophyll-containing foods in processing involving heating under acidic to neutral conditions, or to treatment liquid used when pretreating chlorophyll-containing foods prior to heating, or to treatment liquid or seasoning liquid used in processing under acidic conditions that does not involve heating, and used.

The color fading inhibitor of the present invention is added to water or seasoning liquid used in heating chlorophyll-containing foods, or to a treatment liquid used in pretreating chlorophyll-containing foods prior to heating, such that the content of arginine or a salt thereof is generally 0.01 wt% or more and 1 wt% or less, preferably 0.03 wt% or more and 0.3 wt% or less, more preferably 0.05 wt% or more and 0.3 wt% or less.

The color fading inhibitor of the present invention is also added to a treatment liquid or seasoning liquid used in processing under acidic conditions that does not involve heating, such that the content of arginine or a salt thereof is generally 0.01 wt% or more and 11 wt% or less, preferably 0.03 wt% or more and 9.1 wt% or less, more preferably 0.05 wt% or more and 4.8 wt% or less.

When the color fading inhibitor of the present invention contains a salt of arginine, the above content is expressed as the amount to be added converted into a free form.

The color fading inhibitor of the present invention can effectively inhibit color fading of chlorophyll-containing foods when they are heated under acidic to neutral conditions without adding an alkaline substance to make them alkaline as in the past, or when they are processed under acidic conditions, such as when pickling.

When the color fading inhibitor of the present invention is added to water or a seasoning liquid used for heating, or a treatment liquid used to pretreat chlorophyll-containing foods prior to heating, or a treatment liquid or seasoning liquid used in processing under acidic conditions that does not involve heating, in such an amount that the content of arginine or a salt thereof is as described above, it does not produce a problematic off-flavor derived from arginine, and depending on the amount of arginine added to the water or seasoning liquid used for heating, or the treatment liquid used to pretreat chlorophyll-containing foods prior to heating, or the treatment liquid or seasoning liquid used in processing under acidic conditions that does not involve heating, it can also have the effect of masking the grassy smell of chlorophyll-containing foods.

Chlorophyll-containing foods whose color fading can be inhibited by the color fading inhibitor of the present invention are not particularly limited as long as they are edible plants that contain a green pigment component (chlorophyll) and can be used as food, and examples thereof include green vegetables, tea, algae and the like.

Examples of green vegetables whose color fading can be inhibited by the color fading inhibitor of the present invention include leafy vegetables such as kikuna, Japanese mustard spinach, Japanese basil, bok choy, Chinese chives, basil, parsley, spinach, honewort, mulukhiya and the like; stem vegetables such as asparagus, green onion, sweet coltsfoot and the like; fruit vegetables such as green soybean, okra, snow pea, cucumber, green peas, bitter gourd, zucchini, broad beans, bell pepper and the like; and flower vegetables such as field mustard, broccoli and the like.

Examples of tea whose color fading can be inhibited by the color fading inhibitor of the present invention include tea, the tea leaves of which are used for drinking, such as green powdered tea.

Examples of algae whose fading can be inhibited by the fading inhibitor of the present invention include blue-green algae, Euglena algae, freshwater unicellular algae, seaweed, and the like.

Examples of blue-green algae whose fading can be inhibited by the fading inhibitor of the present invention include Spirulina, Suizenji-nori, and the like

Examples of Euglena algae whose fading can be inhibited by the fading inhibitor of the present invention include Euglena gracilis and the like.

Examples of freshwater unicellular algae whose fading can be inhibited by the fading inhibitor of the present invention include Chlorella and the like.

Examples of seaweed whose fading can be inhibited by the fading inhibitor of the present invention include brown algae such as kombu, hijiki, hondawara, mozuku, wakame, arame, and hirome; green algae such assea lettuce, aonori, miru, and green laver; and red algae such as asakusa nori, tosakanori, shikinori, funori, false ceylon mosses, carageen moss, grateloupia filicina, dulse, and tengusa seaweed.

The color fading inhibitor of the present invention can favorably inhibit color fading of edible juice or extracts of plants, even when the plant itself is not eaten as a chlorophyll-containing food, but the juice or extract of the plant is eaten.

For example, kale, young barley leaves, young ashitaba leaves, and the like, whose juice is eaten, and tea that is extracted with hot water or boiled and used for eating are also included in the chlorophyll-containing foods whose color fading can be inhibited by the color fading inhibitor of the present invention.

The present invention also provides a method for inhibiting color fading of chlorophyll-containing foods when the chlorophyll-containing foods are processed with heating under acidic to neutral conditions or processed under acidic conditions that does not involve heating (hereinafter referred to as the "inhibition method of the present invention" in the present specification).

The "processing involving heating under acidic to neutral conditions" and the "processing under acidic conditions that does not involve heating" are as described above for the color fading inhibitor of the present invention.

The inhibition method of the present invention includes contacting a chlorophyll-containing food with a solution containing arginine or a salt thereof.

An embodiment of contacting a chlorophyll-containing food with a solution containing arginine or a salt thereof includes immersing the chlorophyll-containing food in a solution containing arginine or a salt thereof, spraying a solution containing arginine or a salt thereof on the chlorophyll-containing food, applying a solution containing arginine or a salt thereof to the chlorophyll-containing food, injecting a solution containing arginine or a salt thereof into the chlorophyll-containing food, and the like.

Other embodiments of contacting a chlorophyll-containing food with a solution containing arginine or a salt thereof also include dispersing or suspending the chlorophyll-containing food in a solution containing arginine or a salt thereof, adding arginine or a salt thereof to the squeezed juice or extract of the chlorophyll-containing food or a diluted solution thereof, and the like.

In the inhibition method of the present invention, the arginine or a salt thereof contained in the solution brought into contact with the chlorophyll-containing food is as described above for the color fading inhibitor of the present invention. In the inhibition method of the present invention, arginine or a salt thereof may be prepared as the color fading inhibitor of the present invention described above.

The "solution containing arginine or a salt thereof" in the inhibition method of the present invention may be water or a seasoning liquid used when heating chlorophyll-containing foods in processing involving heating under acidic to neutral conditions, a treatment liquid used when pretreating chlorophyll-containing foods prior to heating, or a treatment liquid or seasoning liquid used in processing under acidic conditions that does not involve heating, to which arginine or a salt thereof has been added and dissolved in.

The water used when heating chlorophyll-containing foods is water that is suitable as the water for food production described above in the color fading inhibitor of the present invention.

The seasoning liquid used when heating chlorophyll-containing foods may be an acidic to neutral seasoning liquid used in cooking chlorophyll-containing foods, and may contain additives such as the pH adjuster, preservative, antioxidant, sweetener, acidulant, bittering agent, seasoning, stock, extract, colorant, flavor and the like described above in the color fading inhibitor of the present invention depending on the purpose of cooking.

Examples of the treatment liquid used to pretreat chlorophyll-containing foods prior to heating include pickling liquid and the like used to pretreat chlorophyll-containing foods prior to heating.

Examples of the treatment liquid used in processing under acidic conditions that does not involve heating include an aqueous solution containing organic acid such as acetic acid, which is used for the purpose of sterilizing and cleaning chlorophyll-containing foods.

Examples of the seasoning liquid used in processing under acidic conditions that does not involve heating include acidic seasonings such as dressing, and acidic seasoning liquids used in cooking such as pickled food, vinegared dish, and marinade, and may contain additives such as pH adjuster, preservative, antioxidant, sweetener, acidulant, bittering agent, seasoning, stock, extract, colorant, and flavor, as described above for the color fading inhibitor of the present invention.

The chlorophyll-containing foods used in the inhibition method of the present invention are also as described above for the color fading inhibitor of the present invention.

In the inhibition method of the present invention, the solution containing arginine or a salt thereof to be brought into contact with the chlorophyll-containing food is prepared by adding and dissolving arginine or a salt thereof in the water or seasoning liquid used in heating the chlorophyll-containing food in processing involving heating under acidic to neutral conditions, or in the treatment liquid used in pretreating the chlorophyll-containing food prior to heating, to a concentration of generally 0.01 wt% or more and 1 wt% or less, preferably 0.03 wt% or more and 0.3 wt% or less, more preferably 0.05 wt% or more and 0.3 wt% or less.

In the inhibition method of one embodiment of the present invention, the solution containing arginine or a salt thereof used in processing involving heating is adjusted to a pH of generally 7.5 or less at 25°C, preferably a pH of 3 to 7.5 at 25°C, more preferably a pH of 3 to 7 at 25°C, further preferably a pH of 3 to 6.7 at 25°C, depending on the purpose of the processing. Such pH adjustment can be performed with a pH adjuster such as hydrochloric acid, acetic acid, or citric acid.

In another embodiment of the inhibition method of the present invention, the solution containing arginine or a salt thereof is generally adjusted to a pH of less than 8 at 25°C, and preferably adjusted to a pH of 3 or more and less than 8 at 25°C.

In the inhibition method of the present invention, the solution containing arginine or a salt thereof to be brought into contact with the chlorophyll-containing food is prepared by adding and dissolving arginine or a salt thereof in a treatment liquid or seasoning liquid used in processing under acidic conditions that does not involve heating, such that the concentration.of arginine or a salt thereof is generally 0.01 wt% or more and 11 wt% or less, preferably 0.03 wt% or more and 9.1 wt% or less, more preferably 0.05 wt% or more and 4.8 wt% or less.

The pH of the solution containing arginine or a salt thereof used in processing under acidic conditions that does not involve heating is generally less than 7 at 25°C, preferably 3 to less than 7, more preferably 3 to 6.7, further preferably 3 to 6.

In the inhibition method of the present invention, when the solution to be brought into contact with the chlorophyll-containing food contains a salt of arginine, the above-mentioned amount to be added is expressed as the amount to be added converted into a free form.

In the inhibition method of the present invention, "immersing a chlorophyll-containing food" refers to immersing the chlorophyll-containing food in a solution containing arginine or a salt thereof. The chlorophyll-containing food may be immersed in the solution as is, or may be cut to an appropriate size, crushed, pulverized, etc., depending on the purpose of processing. The amount of the solution in which the chlorophyll-containing food is immersed is not particularly limited as long as it is an amount that can sufficiently immerse the chlorophyll-containing food, and can be set appropriately depending on the purpose of processing the chlorophyll-containing food. It is preferably 1 to 10 times by weight, more preferably 2 to 8 times by weight, relative to the chlorophyll-containing food.

Therefore, in the inhibition method of the present invention, when the chlorophyll-containing food is contacted by immersing in a solution containing arginine or a salt thereof during processing involving heating under acidic to neutral conditions, the amount of arginine or a salt thereof to be added per 100 g of the chlorophyll-containing food is preferably 0.01 g or more and 10 g or less, more preferably 0.02 g or more and 8 g or less, further preferably 0.03 g or more and 3 g or less.

In addition, in the inhibition method of the present invention, when the chlorophyll-containing food is contacted by immersing in a solution containing arginine or a salt thereof during processing under acidic conditions that does not involve heating, the amount of arginine or a salt thereof to be added per 100 g of the chlorophyll-containing food is preferably 0.01 g or more and 110 g or less, more preferably 0.02 g or more and 91 g or less, further preferably 0.03 g or more and 88 g or less.

When the solution in which the chlorophyll-containing food is immersed contains a salt of arginine, the above-mentioned amount added is expressed as the amount added converted into a free form.

. In the inhibition method of the present invention, "spraying on a chlorophyll-containing food" means spraying a solution containing arginine or a salt thereof on the chlorophyll-containing food using a spray container or the like. The above solution can be sprayed on the chlorophyll-containing food in its original state or after cutting to an appropriate size, crushing, pulverization, etc., depending on the purpose of processing. The amount of the above solution to be sprayed on the chlorophyll-containing food can be set to an amount that can be sprayed uniformly over the entire chlorophyll-containing food, and is preferably 0.1 to 10 times by weight, more preferably 0.2 to 5 times by weight, relative to the chlorophyll-containing food.

Therefore, in the inhibition method of the present invention, when a solution containing arginine or a salt thereof is sprayed on the chlorophyll-containing food to achieve contact during processing involving heating under acidic to neutral conditions, the amount of arginine or a salt thereof to be added per 100 g of chlorophyll-containing food is preferably 0.001 g or more and 10 g or less, more preferably 0.002 g or more and 5 g or less, further preferably 0.003 g or more and 3 g or less.

Furthermore, in the inhibition method of the present invention, when a solution containing arginine or a salt thereof is sprayed on the chlorophyll-containing food to achieve contact with the food during processing under acidic conditions that does not involve heating, the amount of arginine or a salt thereof to be added per 100 g of the chlorophyll-containing food is preferably 0.001 g or more and 110 g or less, more preferably 0.002 g or more and 91 g or less, further preferably 0.003 g or more and 55 g or less.

When the solution sprayed on the chlorophyll-containing food contains an arginine salt, the amount added is expressed as the amount added converted into a free form.

Furthermore, in the inhibition method of the present invention, "applying to the chlorophyll-containing food" means spreading the solution containing arginine or a salt thereof onto the chlorophyll-containing food using a brush or the like. The solution can be applied to the surface of the chlorophyll-containing food as is or after it has been cut to an appropriate size, depending on the purpose of the process. The amount of the solution to be applied to the chlorophyll-containing food can be set as an amount that can be applied uniformly to the entire chlorophyll-containing food. It is preferably 0.1 to 10 times by weight, more preferably 0.2 to 5 times by weight, relative to the chlorophyll-containing food.

Therefore, in the inhibition method of the present invention, when a solution containing arginine or a salt thereof is applied to the chlorophyll-containing food to achieve contact with the food during processing involving heating under acidic to neutral conditions, the amount of arginine or a salt thereof to be added per 100 g of chlorophyll-containing food is preferably 0.001 g or more and 10 g or less, more preferably 0.002 g or more and 5 g or less, further preferably 0.003 g or more and 3 g or less.

Furthermore, in the inhibition method of the present invention, when processing under acidic conditions that does not involve heating involves contacting the chlorophyll-containing food by applying a solution containing arginine or a salt thereof to the food, the amount of arginine or a salt thereof to be added per 100 g of chlorophyll-containing food is preferably 0.001 g or more and 110 g or less, more preferably 0.002 g or more and 91 g or less, further preferably 0.003 g or more and 55 g or less.

When the solution applied to the chlorophyll-containing food contains an arginine salt, the above-mentioned amount to be added is expressed as the amount added converted into a free form.

In the inhibition method of the present invention, when processing involves heating under acidic to neutral conditions and a chlorophyll-containing food is dispersed or suspended in a solution containing arginine or a salt thereof and brought into contact with the food, the concentration of arginine or a salt thereof in the solution in which the chlorophyll-containing food is dispersed or suspended is preferably 0.1 wt% to 0.4 wt%, as the concentration converted into a free form, more preferably 0.2 wt% to 0.4 wt%, taking into consideration the effect of inhibiting color fading when stored under light exposure.

In the inhibition method of the present invention, when processing involves heating under acidic to neutral conditions and arginine or a salt thereof is added to a squeezed juice or extract of a chlorophyll-containing food or a diluted solution thereof and brought into contact with the food, the concentration of arginine or a salt thereof in the squeezed juice or extract of a chlorophyll-containing food or a diluted solution thereof is preferably 0.1 wt% to 0.6 wt%, as the concentration converted into a free form.

In the inhibition method of the present invention, the chlorophyll-containing food may be subjected to a heat treatment after contacting the chlorophyll-containing food with a solution containing arginine or a salt thereof, or the chlorophyll-containing food may be heated in a state where the solution containing arginine or a salt thereof is in contact with the chlorophyll-containing food, for example, where the chlorophyll-containing food is immersed in a solution containing arginine or a salt thereof.

In the inhibition method of the present invention, "heating" can be in the manner described above for the color fading inhibitor of the present invention. For example, it is performed as blanching before freezing, as a pre-treatment before cooking, or as a means for cooking. The conditions (temperature and time) for such heating can be appropriately set according to the manner and purpose of heating. For example, when heated as blanching before freezing, the heating is generally performed at 50°C to 100°C for 1 min to 10 min, preferably at 70°C to 100°C for 3 min to 5 min.

Furthermore, when heating is performed as a pretreatment before cooking, it is generally performed at 50°C to 300°C for 1 min to 10 min, preferably at 70°C to 180°C for 2 min to 5 min, and when heating is performed for the purpose of cooking, it is generally performed at 50°C to 300°C for 1 min to 180 min, preferably at 70°C to 250°C for 2 min to 160 min, depending on the purpose of cooking.

Furthermore, the "heating" in the inhibition method of the present invention can include hot air drying of the chlorophyll-containing food, and such hot air drying is performed at a hot air temperature of 70°C to 80°C, a wind speed.of 2 m/sec to 3 m/sec, and a drying time of 2 hr to 4 hr, depending on the kind of the chlorophyll-containing food.

When hot air drying of the chlorophyll-containing food is performed as the "heating" in the inhibition method of the present invention, the contact between the solution containing arginine or a salt thereof and the chlorophyll-containing food can preferably be performed by immersing the chlorophyll-containing food in a solution containing arginine or a salt thereof. Such immersion treatment may be performed under heating or without heating, such as at room temperature. From the aspect of the effect of inhibiting color fading, it is preferable to perform the treatment under heating.

When immersion treatment is performed under heating, the concentration of arginine or a salt thereof in the solution containing arginine or a salt thereof is preferably 0.03 wt% to 0.3 wt%, more preferably 0.03 wt% to 0.2 wt%, as the concentration converted into a free form.

When immersion treatment is performed without heating, the concentration of arginine or a salt thereof in the solution containing arginine or a salt thereof is preferably 0.1 wt% to 0.3 wt%, more preferably 0.15 wt% to 0.2 wt%, as the concentration converted into a free form.

In addition, in the inhibition method of the present invention, the solution containing arginine or a salt thereof may be brought into contact with the chlorophyll-containing food, and then the food may be subjected to processing under acidic conditions that does not involve heating. The chlorophyll-containing food may be subjected to processing under acidic conditions that does not involve heating in a state where the solution containing arginine or a salt thereof is in contact with the chlorophyll-containing food, for example, where the chlorophyll-containing food is immersed in a solution containing arginine or a salt thereof.

The conditions for processing under acidic conditions that does not involve heating are appropriately set according to the mode and purpose. For example, the food may be left standing at 1°C to 30°C for 1 hr to 365 days, preferably at 2°C to 25°C for 1 hr to 14 days.

The inhibition method of the present invention effectively inhibits color fading of a chlorophyll-containing food when the food is processed with heating under acidic to neutral conditions, or when the food is processed under acidic conditions that does not involve heating.

In the inhibition method of the present invention, when the content of arginine or a salt thereof in the solution brought into contact with the chlorophyll-containing food is within the above range, the chlorophyll-containing food that has been processed with heating under acidic to neutral conditions or under acidic conditions that does not involve heating does not have a problematic off-flavor derived from arginine, and the grassy smell of the chlorophyll-containing food can be masked depending on the content of arginine or a salt thereof in the solution brought into contact with the chlorophyll-containing food.

Furthermore, the present invention provides a method for producing a processed product of a chlorophyll-containing food in which color fading is inhibited (hereinafter also referred to as the "production method of the present invention" in the present specification).

The production method of the present invention includes contacting a chlorophyll-containing food with a solution containing arginine or a salt thereof, and subjecting the chlorophyll-containing food to processing involving heating under acidic to neutral conditions or processing under acidic conditions that does not involve heating.

The "solution containing arginine or a salt thereof," the "chlorophyll-containing food," and the "contact between the solution containing arginine or a salt thereof and the chlorophyll-containing food" in the production method of the present invention are as described above for the color fading inhibitor and the inhibition method of the present invention, and the content of arginine or a salt thereof in the solution and the amount of arginine or a salt thereof added per 100 g of chlorophyll-containing food are also as described above in the inhibition method of the present invention.

The "processing involving heating under acidic to neutral conditions" and the "processing under acidic conditions that does not involve heating" and the conditions of the processing are also as described above for the color fading inhibitor and the inhibition method of the present invention.

In the production method of the present invention, after contacting the solution containing arginine or a salt thereof with the chlorophyll-containing food, or while the solution containing arginine or a salt thereof is in contact with the chlorophyll-containing food, the food can be subjected to processing involving heating under acidic to neutral conditions or processing under acidic conditions that does not involve heating.

Furthermore, in the production method of the present invention, the chlorophyll-containing food that has been contacted with a solution containing arginine or a salt thereof and subjected to processing involving heating under acidic to neutral conditions or processing under acidic conditions that does not involve heating can be further subjected to processing involving heating such as cooking or processing under acidic conditions that does not involve heating.

Examples of processed products of chlorophyll-containing foods produced by the production method of the present invention include dried green vegetables, frozen green vegetables, cooked green vegetables (prepared dishes), retort pouch foods of the aforementioned cooked foods, ingredients for soups (miso soup, soup, etc.) (hot air dried products, freeze dried products, etc.), dried seaweed products (sun dried products, hot air dried products, freeze dried products, etc.), salad, vinegared dish, marinade, pickles, ingredients for dressings, green powdered tea, and the like..

Furthermore, processed products of chlorophyll-containing foods produced by the production method of the present invention include tea leaves that have been dried or roasted after contact with a solution containing arginine or a salt thereof, tea produced by extracting from the said tea leaves, tea boiled in an aqueous solution containing arginine or a salt thereof, and green juice produced by squeezing green vegetables that have been contacted with a solution containing arginine or a salt thereof, and the like, in which the extract or juice is consumed rather than the chlorophyll-containing food itself.

Furthermore, processed products of chlorophyll-containing foods produced by the production method of the present invention include processed foods containing the extract or juice of the chlorophyll-containing food, such as baked confectioneries containing the extract or squeezed juice of the above-mentioned chlorophyll-containing food, and the like.

Furthermore, processed foods produced by the production method of the present invention include baked products containing a suspension or paste prepared by adding a chlorophyll-containing food such as green powdered tea to an aqueous solution containing arginine or a salt thereof, and processed foods such as beverages containing extracts or squeezed juices of chlorophyll-containing foods such as green tea and green juice and prepared by heat sterilization.

By the production method of the present invention, processed products of chlorophyll-containing foods are obtained in which color fading is inhibited well and a vivid green color is maintained.

Furthermore, in the processed product of chlorophyll-containing food produced by the production method of the present invention, the off-flavor derived from arginine is not noticeable to a problematic degree, and the grassy smell of the chlorophyll-containing food can be masked depending on the content of arginine or a salt thereof in the solution with which the chlorophyll-containing food is contacted.

Furthermore, in processed products of chlorophyll-containing foods produced by the production method of the present invention, color fading due to exposure to light during storage can be inhibited well.

### [Example]

The present invention is described in more detail with reference to examples.

### [Example 1 and Comparative Examples 1 and 2] Color fading inhibitor for chlorophyll-containing foods

L-arginine was used as the color fading inhibitor for chlorophyll-containing foods in Example 1 (hereinafter sometimes referred to as "color fading inhibitor of Example 1"). L-lysine and L-histidine were used as the color fading inhibitors of Comparative Examples 1 and 2, respectively.

### [Experimental Example 1] Study of color fading inhibiting effect for various chlorophyll-containing foods

Each color fading inhibitor of Examples and Comparative Examples was added and evaluated for its color fading inhibiting effect on chlorophyll-containing foods during processing involving heating, as follows.

Each color fading inhibitor of Examples and Comparative Examples was dissolved in water such that the amount of amino acid added to water was the amount shown in Table 1, and 50 g of each of the various chlorophyll-containing foods shown in Table 1 was immersed in 100 g of each of the aforementioned aqueous solutions, and the food was filled into a pouch and heated in a water bath at 100°C for 30 min. As a control, 50 g of each chlorophyll-containing food was immersed in 100 g of water not containing any of the color fading inhibitors of Examples or Comparative Examples, and heated in the same manner. After heating, the pH of the immersion liquid in which the chlorophyll-containing food was immersed was measured, and the pH of the control immersion liquid was 6.28 at 25°C, and the pH of the immersion liquid containing the color fading inhibitor of Example 1 was 7.10 at 25°C.

The chlorophyll-containing foods that had been heated and then cooled were observed by 15 panelists, who compared the chlorophyll-containing foods with the control to evaluate their color fading-inhibiting effect using the following evaluation criteria. The evaluation results, determined by discussion among the 15 panelists, are shown in Table 1.

### <Evaluation criteria>

⊙: color fading is remarkably inhibited compared to the control
O: color fading is clearly inhibited compared to the control
Δ: color fading is slightly inhibited compared to the control
×: color fading is observed to the same extent as the control

Furthermore, the color fading inhibitor of Example 1 was evaluated for its effect of inhibiting color fading of chlorophyll-containing foods during processing under acidic conditions that does not involve heating, as follows.

The color fading inhibitor of Example 1 was added and dissolved in the seasoning liquid for pickling such that the amount of L-arginine added was 1.00 wt%, and 50 g of each of the chlorophyll-containing foods shown in Table 1 was immersed in 100 g of the seasoning liquid and left standing at room temperature for one or two weeks. As controls, 50 g of each of the chlorophyll-containing foods was immersed in 100 g of seasoning liquid to which the color fading inhibitor of Example 1 was not added, and similarly left standing for one and two weeks, respectively. The pH of the control and the seasoning liquid to which the color fading inhibitor of Example 1 was added were measured, and were found to be 3.30 and 3.73 at 25°C, respectively. Grain vinegar was used as the seasoning liquid for pickling. Four panelists observed the chlorophyll-containing foods after one and two weeks of immersing in the pickling seasoning liquid, and evaluated the chlorophyll-containing foods for their effect of inhibiting color fading in comparison with the control, using the above evaluation criteria. The results of the evaluation, determined by discussion among the four panelists, are shown in Table 1.

**[Table 1]**

| processing method | sample | amount added (wt%) | chlorophyll-containing food | | | | | | | | | |
|---|---|---|---|---|---|---|---|---|---|---|---|---|
| | | | Japanese mustard spinach | spinach | Chinese chives | okra | wakame | green soybean | bell pepper | cucumber | Japanese basil | basil |
| heating (100°C, 30 min) | Example 1 | 0.20 | ⊙ | ⊙ | ⊙ | ⊙ | ⊙ | Δ | Δ | - | - | - |
| | Comparative Example 1 | 0.20 | × - Δ | - | - | - | - | - | - | - | - | - |
| | Comparative Example 2 | 0.20 | × | - | - | - | - | - | - | - | - | - |
| pickling (room temperature, 1 week) | Example 1 | 1.00 | - | - | - | ○ | ○ | Δ | ○ | ⊙ | ⊙ | ⊙ |
| pickling (room temperature, 2 weeks) | Example 1 | 1.00 | - | - | - | - | - | - | Δ - ○ | ⊙ | ⊙ | ⊙ |

| | | | | | | | | | | | | |
|---|---|---|---|---|---|---|---|---|---|---|---|---|
| * In Table, "-" means that the evaluation of color fading inhibiting effect was not performed. | | | | | | | | | | | | |

As shown in Table 1, when the Japanese mustard spinach was heated in water to which 0.20 wt% of the color fading inhibitor of Example 1 had been added, the color fading of the green color of the Japanese mustard spinach was remarkably inhibited, even under the harsh heating conditions of 100°C for 30 min. The color fading inhibiting effect of the color fading inhibitor of Example 1 was also remarkably observed in spinach, Chinese chives, okra, and wakame, and slight color fading inhibition was observed in green soybean and bell peppers.

On the other hand, when Japanese mustard spinach was heated in water to which 0.20 wt% of each of the color fading inhibitors of Comparative Examples 1 and 2 had been added, the color fading inhibiting effect of the Japanese mustard spinach was not observed.

The above results suggest that the use of the color fading inhibitor of the present invention effectively inhibits color fading of various chlorophyll-containing foods when heated under neutral conditions without the addition of alkaline substances as in the past.

On the other hand, it was shown that lysine and histidine, which are basic amino acids like arginine, do not have the effect of inhibiting color fading of chlorophyll-containing foods when heated under neutral conditions.

Furthermore, as shown in Table 1, when okra, wakame, and bell peppers were immersed in a pickling seasoning liquid containing 1.00 wt% of the color fading inhibitor of Example 1 and left at room temperature for one week, color fading was inhibited, and slight inhibition of color fading was observed for green soybean. When bell peppers were immersed in a pickling seasoning liquid containing 1.00 wt% of the color fading inhibitor of Example 1 and left at room temperature for two weeks, color fading was also inhibited. For cucumber, Japanese basil, and basil, significant inhibition of color fading was observed when the vegetables were immersed for one week and two weeks in a pickling seasoning liquid containing 1.00 wt% of the color fading inhibitor of Example 1.

The above results suggest that by using the color fading inhibitor of the present invention, color fading of various chlorophyll-containing foods can be effectively inhibited even in processing under acidic conditions that does not involve heating, where color fading of chlorophyll-containing foods has conventionally been a problem.

### [Experimental Example 2] Study of influence of pH on the inhibition of color fading of green vegetables

Each of the color fading inhibitors of Example 1 and Comparative Examples 1 and 2 was added and dissolved in water such that the amount of amino acid added to the water was 0.20 wt%, and the pH of the aqueous solution was adjusted to 3, 5, and 7 with hydrochloric acid. 50 g of Japanese mustard spinach was immersed in 100 g of each of the aqueous solutions of the Examples and Comparative Examples at each pH, and the solution was filled into a pouch and heated in a hot water bath at 100°C for 30 min. As a control, 50 g of Japanese mustard spinach was immersed in 100 g of water adjusted to pH 3, 5, and 7 with hydrochloric acid, without adding any of the color fading inhibitors of Examples and Comparative Examples, and heated in the same manner.

The Japanese mustard spinach that had been cooled after heating was observed by 10 panelists, and the inhibition of color fading of Japanese mustard spinach was evaluated according to the following evaluation criteria, and the evaluation results determined by discussion among the 10 panelists are shown in Table 2.

### <Evaluation criteria>

⊙: green color is very well maintained and fading is remarkably inhibited
O: green color is well maintained and fading is well inhibited
Δ: green color is slightly maintained and fading is slightly inhibited
×: green color is not maintained and fading is not inhibited

**[Table 2]**

| pH | control | Example 1 | Comparative Example 1 | Comparative Example 2 |
|---|---|---|---|---|
| 3 | × | ⊙ | × | × |
| 5 | × | ⊙ | × | × |
| 7 | × | ⊙ | × | × |

As shown in Table 2, when heated under acidic to neutral conditions at pH 3 to 7, the green color of Japanese mustard spinach was not maintained in the control, and remarkable fading was observed.

On the other hand, when heated in water to which 0.20 wt% of the fading inhibitor of Example 1 had been added, the green color of Japanese mustard spinach was very well maintained and fading was remarkably inhibited at all of pH 3, 5, and 7.

However, when heated in water containing 0.20 wt% of the color fading inhibitors of Comparative Examples 1 and 2, the green color of Japanese mustard spinach was not maintained at any pH, and no color fading inhibitory effect was observed.

The above results suggest that by using the color fading inhibitor of the present invention, color fading of green vegetables can be effectively inhibited when heated under acidic to neutral conditions. It was also shown that such color fading inhibiting effect was not observed with the basic amino acids lysine and histidine.

### [Experimental Example 3] Study of influence of the amount of L-arginine added on the effect of inhibiting color fading of green vegetables

The color fading inhibitor of Example 1 was added and dissolved in water such that the amount of L-arginine added to the water was the amount shown in Table 3. 35 g of Japanese mustard spinach was immersed in 70 g of each of the aqueous solutions, which were then packed into a pouch and heated in a hot water bath at 100°C for 30 min. As a control, 35 g of Japanese mustard spinach was immersed in 70 g of water to which the color fading inhibitor of Example 1 had not been added and heated in the same manner.

Five panelists observed Japanese mustard spinach that had been heated and cooled, and evaluated the effect of inhibiting color fading of the Japanese mustard spinach according to the evaluation criteria described in Experimental Example 2. The five panelists also ate Japanese mustard spinach that had been heated and cooled, and performed a sensory evaluation of the presence or absence of an unusual taste derived from L-arginine. The evaluation results determined by discussion among the five panelists are shown in Table 3. Table 3 also shows comments from panelists during the sensory evaluation. Table 3 also shows the pH values of the control and the aqueous solutions containing the color fading inhibitor of Example 1, which were heated and then cooled and measured at 25°C.

**[Table 3]**

| evaluation item/sample | control | L-arginine amount added (wt%) | | | | | | |
|---|---|---|---|---|---|---|---|---|
| | | 0.01 | 0.03 | 0.05 | 0.10 | 0.15 | 0.20 | 0.30 |
| pH | 5.86 | 5.69 | 6.03 | 6.09 | 6.51 | 7.19 | 7.16 | 8.13 |
| color fading inhibiting effect | × | Δ | ○ | ⊙ | ⊙ | ⊙ | ⊙ | ⊙ |
| unusual taste derived from arginine | - | none | none | none | none | none | none | none |
| comments in sensory evaluation | none particularly | no difference from control | no difference from control | no difference from control | no difference from control | grassy-smelling of Japanese mustard spinach is masked | grassy-smelling of Japanese mustard spinach is masked | grassy-smelling of Japanese mustard spinach is masked |

| | | | | | | | | |
|---|---|---|---|---|---|---|---|---|
| * In Table, "-" means that the evaluation was not performed. | | | | | | | | |

As shown in Table 3, when the amount of L-arginine added to water in which Japanese mustard spinach was immersed was 0.01 wt% (L-arginine concentration in the immersing solution ≅ 0.01 wt%), color fading of the Japanese mustard spinach was slightly inhibited, and when the amount of L-arginine added to water in which Japanese mustard spinach was immersed was 0.03 wt% (L-arginine concentration in the immersing solution ≅ 0.03 wt%), color fading of the Japanese mustard spinach was inhibited well. Furthermore, when the amount of L-arginine added to water in which Japanese mustard spinach was immersed was between 0.05 wt% (L-arginine concentration in the immersing liquid ≅ 0.05 wt%) and 0.30 wt% (L-arginine concentration in the immersing liquid ≅ 0.30 wt%), color fading of the Japanese mustard spinach was remarkably inhibited.

Furthermore, regardless of the amount added, no unpleasant taste derived from arginine was observed in Japanese mustard spinach after heating and cooling. When the amount of L-arginine added was between 0.15 wt% (L-arginine concentration in the immersing liquid ≅ 0.15 wt%) and 0.30 wt% (L-arginine concentration in the immersing liquid - 0.30 wt%), the comment was received that the grassy smell of the Japanese mustard spinach was masked in the Japanese mustard spinach after heating and cooling.

The above results suggest that, when the color fading inhibitor of the present invention is used for processing involving heating, L-arginine is generally added to the water in which green vegetables are immersed such that the amount is 0.01 wt% or more, preferably 0.03 wt% to 0.30 wt%, more preferably 0.05 wt% to 0.30 wt%.

When the amount of L-arginine added to water is 0.30 wt%, the pH of the aqueous solution in which the Japanese mustard spinach is immersed was 8.13. However, considering the results of the above Experimental Example 2, it is presumed that the same color fading inhibiting effect can be obtained even if the pH of the aqueous solution is adjusted to 7 or less.

### [Experimental Example 4] Study of influence of heating time on the effect of inhibiting color fading of green vegetables

The effect of heating time on the effect of inhibiting color fading of green vegetables of the present invention was examined as follows.

### (1) Study of the effect of inhibiting color fading of boiled snap peas

0.2 wt% of the color fading inhibitor of Example 1 was added to 200 g of water and boiled. 35 g of snap peas were immersed in the water and heated for 3 min, cooled in cold water for 30 sec, and drained. The snap peas were then left standing in a refrigerator for 3 days. As a control, snap peas were heated and cooled in the same manner without adding the color fading inhibitor of Example 1 and left standing in a refrigerator.

Three panelists observed the snap peas that had been left standing in the refrigerator for 3 days, and the snap peas were evaluated for their color fading inhibiting effect according to the evaluation criteria described in Experimental Example 2. The evaluation results, determined by discussion among the three panelists, are shown in Table 4 together with comments from the panelists.

**[Table 4]**

| sample | color fading inhibiting effect | evaluation comments |
|---|---|---|
| when color fading inhibitor of Example 1 was added and heated | ⊙ | vivid green was shown |
| control | Δ | green was slightly maintained |

As shown in Table 4, when the snap peas were heated in water to which the color fading inhibitor of Example 1 had been added, the green color of the snap peas was maintained better than in the control, even after a short heating period of 3 min.

### (2) Study of the effect of inhibiting color fading in the preparation of stewed Japanese mustard spinach

A seasoning liquid with the composition shown in Table 5 was boiled, and 23.45 g of Japanese mustard spinach was immersed in 100 g of the aforementioned seasoning liquid, which was then re-boiled and heated for 5 min, and then allowed to cool for 10 min to prepare stewed Japanese mustard spinach. As a control, stewed Japanese mustard spinach was prepared in the same manner, except that the color fading inhibitor of Example 1 was replaced with water.

The stewed Japanese mustard spinach prepared was observed by three panelists, who evaluated the effect of inhibiting color fading of the Japanese mustard spinach according to the evaluation criteria described in Experimental Example 2. The evaluation results, determined by discussion among the three panelists, are shown in Table 5, along with comments from the panelists.

**[Table 5]**

| component | seasoning liquid containing color fading inhibitor of Example 1 | control |
|---|---|---|
| L-arginine | 0.20 | 0 |
| Yamaki white soup stock | 12.26 | 12.26 |
| water | 87.54 | 87.74 |
| total | 100.00 | 100.00 |
| effect of inhibiting color fading of green vegetables | ⊙ | × |
| evaluation comments | green is maintained | color is faded, presenting dull tone |

As shown in Table 5, when cooked in a seasoning liquid containing the color fading inhibitor of Example 1, the green color of the Japanese mustard spinach was maintained well even after a short heat treatment of 5 min.

(3) The study results of the above-mentioned (1) and (2) suggest that color fading of green vegetables can be inhibited well when immersed in water or seasoning liquid containing the color fading inhibitor of the present invention and then heated, even when the heating time is short, for example, when the heating time is 3 min to 5 min.

### [Experimental Example 5] Study of the effect of inhibiting color fading when immersed in a solution containing the color fading inhibitor of the present invention and then heated

The effect of inhibiting color fading when green vegetables are immersed in a solution containing the color fading inhibitor of the present invention and then heated was studied as follows.

### (1) Study of the effect of inhibiting color fading in stir-fried bitter gourd

100 g of bitter gourd was sliced to a thickness of 5 mm and pretreated by immersing for 10 min in 100 g of water to which 0.2 wt% of the color fading inhibitor of Example 1 had been added. Oil was spread on a heated frying pan, the drained bitter gourd after the above-mentioned preparatory process was added, and the mixture was fried for 5 min, and 0.80 g of salt and 10.00 g of sake were added for seasoning. A control was prepared by treating in the same way but without adding the color fading inhibitor of Example 1.

The stir-fried bitter gourd immersed in water to which the color fading inhibitor of Example 1 had been added and the control stir-fried bitter gourd were observed by three panelists, who evaluated the effect of inhibiting color fading of bitter gourd according to the evaluation criteria described in Experimental Example 2. The evaluation results, determined by discussion among the three panelists, are shown in Table 6 together with comments from the panelists.

**[Table 6]**

| sample | color fading inhibiting effect | evaluation comments |
|---|---|---|
| when stir-fried after immersion in water containing color fading inhibitor of Example 1 | ⊙ | green is maintained |
| control | × | color is faded, presenting dull tone |

As shown in Table 6, even when bitter gourd immersed for a short time in water containing the color fading inhibitor of Example 1 was taken out, drained, and stir-fried, color fading of the bitter gourd was inhibited well.

### (2) Study of the effect of inhibiting color fading in zucchini stewed in tomato sauce

35 g of zucchini was cut into bite-sized pieces and immersed for 10 min in 70 g of water to which 0.2 wt% of the color fading inhibitor of Example 1 had been added. Then, the zucchini was placed in a pot together with the immersing liquid, and the other ingredients shown in Table 7 were added, and the pot was heated with a lid on. After boiling, the pot was simmered on low heat for 20 min to prepare zucchini stewed in tomato sauce. As a control, zucchini stewed in tomato sauce was prepared in the same manner but without adding the color fading inhibitor of Example 1.

The prepared zucchini stewed in tomato sauce was observed by three panelists, who evaluated the effect of inhibiting the color fading of the zucchini according to the evaluation criteria described in Experimental Example 2. The evaluation results, determined by discussion among the three panelists, are shown in Table 7 together with comments from the panelists.

**[Table 7]**

| component | when cooked after immersion in water to which color fading inhibitor of Example 1 had been added | control |
|---|---|---|
| L-arginine | 0.14 | 0 |
| boiled tomato | 50.00 | 50.00 |
| salt | 1.20 | 1.20 |
| white pepper | 0.05 | 0.05 |
| olive oil | 4.00 | 4.00 |
| water | 70.00 | 70.00 |
| total | 125.39 | 125.25 |
| effect of inhibiting color fading of green vegetables | ⊙ | × |
| evaluation comments | green is maintained | color is faded, presenting dull tone |

As shown in Table 7, the color fading of zucchini was inhibited well even when the zucchini was immersed for a short time in water containing the color fading inhibitor of Example 1 and then cooked by heating.

(3) The studies results of the above-mentioned (1) and (2) suggest that the color fading of green vegetables can be inhibited well in both cases where green vegetables are immersed in a solution containing the color fading inhibitor of the present invention and then taken out and heat-treated, and where green vegetables are immersed in a solution containing the color fading inhibitor of the present invention and then heat-treated as is. It was also suggested that the above-mentioned color fading inhibiting effect was observed even when green vegetables were immersed in a solution containing the color fading inhibitor of the present invention for a short period of time.

### [Experimental Example 6] Study of influence of the amount of arginine added on the effect of inhibiting color fading of green vegetables in heat treatment under acidic conditions

Water adjusted to pH 2.99 with hydrochloric acid was used as a control. The color fading inhibitor of Example 1 was added and dissolved in the aforementioned water such that the amount of L-arginine added to the water was the amount shown in Table 8. 35 g of Japanese mustard spinach was immersed in 70 g of the control water and each aqueous solution, which was then filled into pouches and heated in a hot water bath at 100°C for 30 min.

After heating and cooling, the pH of the control and each aqueous solution was measured, and the Japanese mustard spinach was observed by five panelists, who evaluated the effect of inhibiting color fading of the Japanese mustard spinach according to the evaluation criteria described in Experimental Example 2. The evaluation results, determined by discussion among the five panelists, are also shown in Table 8.

**[Table 8]**

| evaluation item/sample | control | L-arginine amount added (wt%) | | | |
|---|---|---|---|---|---|
| | | 0.05 | 0.10 | 0.15 | 0.20 |
| pH | 2.99 | 2.99 | 2.99 | 2.99 | 3.99 |
| color fading inhibiting effect | × | ⊙ | ⊙ | ⊙ | ⊙ |

As shown in Table 8, even when heated under acidic conditions, the addition of 0.05 wt% of L-arginine to the water (L-arginine concentration in the immersing solution ≅ 0.05 wt%) remarkably inhibited the color fading of Japanese mustard spinach.

The above results suggest that, from the aspect of the effect of inhibiting color fading of green vegetables, it is more preferable to add L-arginine to the water in which green vegetables are immersed, such that it is 0.05 wt% or more, even when processing under acidic conditions with heating is performed.

### [Experimental Example 7] Study of influence of the amount of arginine added in processing under acidic conditions that does not involve heating

The amount of the color fading inhibitor of Example 1 shown in Table 9 was added and dissolved in 20 g of rice vinegar, and the mixture was filled into a pouch together with 2.0 g of Japanese basil leaves (Japanese basil) and left standing at room temperature for 1 hr. Thereafter, the pH of each solution was measured, and two panelists evaluated the taste of Japanese basil leaves and the off-flavor derived from L-arginine according to the following evaluation criteria. The evaluation results were determined by discussion between the two panelists, and are shown in Table 9 along with the measured pH values.

### <Evaluation criteria>

### (1) Taste of Japanese basil leaves

O: very good
O: good
Δ: rather good
×: poor

### (2) Off-flavor derived from L-arginine

none: no taste derived from L-arginine is detected slightly present: some people may detect a taste derived from L-arginine, but it is not perceived as an off-flavor
somewhat present: a taste derived from L-arginine is detected and perceived as an off-flavor, but within the acceptable range present: a taste derived from L-arginine is strongly detected and is not acceptable

In the Table, for each amount of L-arginine added, the L-arginine concentration in the solution in which the Japanese basil leaves were immersed was calculated and shown in parentheses. When the color fading inhibitor of Example 1 was added, color fading of the Japanese basil leaves was inhibited in all cases.

**[Table 9]**

| evaluation item/sample | control | L-arginine amount added (wt%) | | | | | | | |
|---|---|---|---|---|---|---|---|---|---|
| | | 1.0(0.99) | 3.0(2.91) | 5.0 (4.76) | 10.0(9.09) | 12.0 (10.7) | 13.0 (11.5) | 15.0(13.0) | 20.0(16.7) |
| pH | 2.65 | 3.12 | 3.76 | 4.19 | 4.87 | 5.81 | 7.34 | 8.17 | 8.53 |
| taste | - | ⊙ | ⊙ | ○ | ○ | Δ | Δ | × | × |
| comments | - | none | none | slightly present | slightly present | somewhat present | somewhat present | present | present |

| | | | | | | | | | |
|---|---|---|---|---|---|---|---|---|---|
| *; In Table, the numerical value in parentheses for the amount of L-arginine added indicates the concentration in the immersion liquid. **; In Table, "-" means that the evaluation was not performed. | | | | | | | | | |

As shown in Table 9, when the amount of L-arginine added to the rice vinegar was 5.0 wt% (L-arginine concentration in the solution in which Japanese basil leaves were immersed = 4.76 wt%) and 10.0 wt% (L-arginine concentration in the solution in which Japanese basil leaves were immersed = 9.09 wt%), a good taste was observed, and only a slight off-flavor due to L-arginine was observed. When the amount of L-arginine added to the rice vinegar was 12.0 wt% (L-arginine concentration in the solution in which Japanese basil leaves were immersed = 10.7 wt%), it was evaluated that there was a slight off-flavor due to L-arginine, and a slight decrease in taste was observed, but it was within an acceptable range.

However, when the amount of L-arginine added to rice vinegar was 13.0 wt% (L-arginine concentration in the solution in which Japanese basil leaves were immersed = 11.5 wt%), a drastic increase in pH was observed, which was found to be unsuitable for the purpose of processing under acidic conditions.

The above-mentioned results of Experimental Example 7 suggest that when processing is performed under acidic conditions without heating, the L-arginine concentration in the solution that is brought into contact with green vegetables is preferably 11 wt% or less, more preferably 9.1 wt% or less, further preferably 4.8 wt% or less.

### [Experimental Example 8] Study of effect of inhibiting color fading in heating (retort) treatment under pressure

The color fading inhibitor of Example 1 was added to 70 g of water such that the amount of L-arginine added was 0.2 wt% or 0.3 wt%. 35 g of Japanese mustard spinach was immersed in each of the dissolved solutions, packed into a pouch, and heated in a hot water bath at 100°C for 3 min. Then, it was heated under pressure at 121°C for 10 min in an autoclave. As a control, the same treatment was performed without adding the color fading inhibitor of Example 1. After cooling, the effect of inhibiting color fading of Japanese mustard spinach was evaluated by 10 panelists according to the evaluation criteria described in Experimental Example 2, and the evaluation results determined by discussion among the 10 panelists are shown in Table 10 together with comments from the panelists.

**[Table 10]**

| evaluation/sample | control | L-arginine amount added (wt%) | |
|---|---|---|---|
| | | 0.2 | 0.3 |
| effect of inhibiting color fading of green vegetables | × | ○ - ⊙ | ⊙ |
| comments | none particularly | effective | clearly effective |

As shown in Table 10, fading of green color was inhibited well when the color fading inhibitor of Example 1 was added and dissolved such that the amount of L-arginine added was 0.2% or 0.3 wt%, and the Japanese mustard spinach was immersed in water (L-arginine concentration in the solution in which the Japanese mustard spinach was immersed ≅ 0.2% and 0.3 wt%) and heated under pressure.

The above-mentioned results of Experimental Example 8 suggest that the color fading inhibitor of the present invention has a good color fading inhibiting effect even when heating under pressurization (retort) treatment is performed.

### [Experimental Example 9] Study of color fading inhibiting effect on green powdered tea

1.5 g of green powdered tea (Yamamasa Koyamaen high-grade Uji green powdered tea) was added to 60 mL of a solution containing 0.2 wt% of the color fading inhibitor of Example 1 in hot water, and dispersed uniformly. The solution was then filled into a pouch and heated in a hot water bath at 95°C for 30 min. As a control, 1.5 g of green powdered tea was added to 60 mL of hot water and treated in the same manner. Then, the effect of inhibiting the color fading of green powdered tea was evaluated by 10 panelists according to the following evaluation criteria, in comparison with a control in which heating was not performed. The evaluation results, determined by discussion among the 10 panelists, are shown in Table 11.

### <Evaluation criteria>

O: the same level of green as the unheated control was exhibited, and color fading is inhibited well
Δ: slight color fading of green is observed compared to unheated control
×: remarkable color fading of green is observed compared to the unheated control

**[Table 11]**

| control | L-arginine added solution |
|---|---|
| × | ○ |

As shown in Table 11, even when green powdered tea dispersed in hot water containing 0.2 wt% of L-arginine (L-arginine concentration in hot water with dispersed green powdered tea ≅ 0.2 wt%) was heated, the color fading of green powdered tea was effectively inhibited.

The above-mentioned results of Experimental Example 9 suggest that the color fading inhibitor of the present invention can effectively inhibit the color fading of green tea even in green powdered tea added and dispersed in hot water.

### [Experimental Example 10] Study of effect of inhibiting color fading of green tea extract

Tea leaves (deep steamed tea from Shizuoka Prefecture, Arahataen Co., Ltd.) (4.3 wt% relative to ion-exchanged water) were placed in a tea bag (unbleached type, large size, Zenmi Co., Ltd.), filled with ion-exchanged water in a pouch, sealed, extracted in a hot water bath at 50°C for 8 min, and filtered to obtain a green tea extract. The extract was then diluted 4.5 times with ion-exchanged water to prepare a diluted green tea extract. The diluted green tea extract was dispensed, and sodium ascorbate was added to the comparative sample, ascorbic acid and the color fading inhibitor of Example 1 (L-arginine) were added to the sample in the amounts shown in Table 12, and the mixture was heated in a water bath at 90°C for 15 min. As a control, the diluted green tea extract was similarly heated. After cooling, the effect of inhibiting color fading of the diluted green tea extract was evaluated by five panelists according to the following evaluation criteria, and the evaluation results determined by discussion among the five panelists are shown in Table 12 together with the comments of the panelists. Table 12 also shows the pH values measured at 25°C for the unheated control, the heated and cooled control, the comparative sample, and each sample.

### <Evaluation criteria>

⊙: color fading of green tea extract is remarkably inhibited compared to the control
O: color fading of green tea extract is clearly inhibited compared to the control
Δ: color fading of green tea extract is slightly inhibited compared to the control
×: color fading of green tea extract is observed to the same extent as the control

**[Table 12]**

| component | control (unheated) | control | comparison sample | L-arginine concentration (wt%) in sample | | | | | | |
|---|---|---|---|---|---|---|---|---|---|---|
| | | | | 0.12 | 0.30 | 0.30 | 0.30 | 0.40 | 0.40 | 0.60 |
| diluted solution of green tea extract | 100.00 | 100.00 | 100.00 | 100.00 | 100.00 | 100.00 | 100.00 | 100.00 | 100.00 | 100.00 |
| sodium ascorbate | | | 0.10 | | | | | | | |
| ascorbic acid | | | | 0.10 | 0.30 | 0.40 | 0.45 | 0.40 | 0.30 | 0.60 |
| L-arginine | | | | 0.12 | 0.30 | 0.30 | 0.30 | 0.40 | 0.40 | 0.61 |
| total (parts by weight) | 100.00 | 100.00 | 100.10 | 100.22 | 100.60 | 100.70 | 100.75 | 100.80 | 100.70 | 101.21 |
| pH | 6.18 | 6.21 | 6.10 | 7.01 | 5.69 | 4.91 | 4.58 | 7.83 | 7.78 | 5.74 |
| color fading inhibiting effect | - | - | × | ⊙ | ○ | ○ | ○ | ○ | ○ | ○ |
| comments | tea-like green | color fading observed | color fading observed | green is clearly maintained | green is slightly maintained | green is somewhat maintained | green is somewhat maintained | green is somewhat maintained | green is somewhat maintained | green is somewhat maintained |

| | | | | | | | | | | |
|---|---|---|---|---|---|---|---|---|---|---|
| * The numerical value in the column corresponding to each component in the Table indicates the content (parts by weight) of the component, and the blank column corresponding to each component indicates that the component is not contained. ** The color fading inhibiting effect in the Table indicates the evaluation results by comparison with the degree of color fading of green tea extract in the control. | | | | | | | | | | |

As shown in Table 12, when a diluted solution of green tea extract was heated at pH = 4.6 to 7.8, the color fading of the green tea was clearly inhibited in the sample to which 0.12 wt% to 0.60 wt% L-arginine was added, and the addition of 0.12 wt% L-arginine remarkably inhibited the color fading of the green tea.

The above-mentioned results of Experimental Example 10 suggest that the color fading inhibitor of the present invention can effectively inhibit color fading caused by processing involving heating under acidic to neutral conditions, even in chlorophyll-containing foods in which the extract of plant is the object of eating.

### [Experimental Example 11] Study of effect of inhibiting color fading in baked confectionery containing green powdered tea

Green powdered tea cookies were prepared as shown below using the ingredients shown in Table 13, and the effect of the color fading inhibitor of Example 1 (L-arginine) on color fading due to baking and exposure to light was studied.

First, L-arginine in Table 13 was dissolved in tap water, and green powdered tea ("Green powdered tea for confectionery", Tomizawa Shoten Co., Ltd.) was added to make a paste (green powdered tea paste). Margarine ("Pantheon", J-Oil Mills Co., Ltd.) that had been brought to room temperature was placed in a stand mixer (Kitchen Aid Co., Ltd.), salt was added, and the mixture was kneaded at 6th speed for 40 sec, and the green powdered tea paste was added and the mixture was kneaded at 6th speed for 60 sec while scraping off the mixture every 15 sec. Next, granulated sugar was added and the mixture was mixed at 6th speed for 60 sec while scraping off the mixture every 15 sec. Wheat flour ("Flour", Nissin Foods Inc.) was added and the mixture was mixed at 1st speed for 30 sec. After scraping off the mixture, the mixture was kneaded at 1st speed for a further 30 sec. The mixture was then bundled together, wrapped in kitchen wrap and left standing overnight at 10°C. The pH of the dough before baking was measured at 25°C.

The above-mentioned dough was kneaded again, placed in a plastic bag with a zipper, rolled out to a thickness of 5 mm using a sheeter, cut into shapes, and baked at 170°C for 8 min. Green powdered tea cookies prepared in the same manner but without the addition of L-arginine was used as a control.

Five panelists evaluated the effect of inhibiting color fading of the baked green powdered tea cookies at n=5 according to the following criteria. In addition, the effect of inhibiting color fading was evaluated in the same manner after storing the cookies for two days at 25°C under 1,000 lux of light irradiation using a light stability tester "LTL-200A5-15WCD" (Nagano Science Co., Ltd.) (light source: white fluorescent lamp "straight tube rapid start type 20 type"). The evaluation results, determined by discussion among the five panelists, are shown in Table 13 along with comments from the panelists.

### <Evaluation criteria>

⊙: color fading of cookie is remarkably inhibited compared to the control
○: color fading of cookie is clearly inhibited compared to the control
Δ: color fading of cookie is slightly inhibited compared to the control
×: color fading of cookie is observed to the same extent as the control

**[Table 13]**

| material | | control | arginine concentration (wt%) | | |
|---|---|---|---|---|---|
| | | | 0.1 | 0.2 | 0.4 |
| wheat flour | | 100.00 | 100.00 | 100.00 | 100.00 |
| margarine | | 50.00 | 50.00 | 50.00 | 50.00 |
| granulated sugar | | 50.00 | 50.00 | 50.00 | 50.00 |
| salt | | 0.30 | 0.30 | 0.30 | 0.30 |
| green powdered tea | | 10.00 | 10.00 | 10.00 | 10.00 |
| tap water | | 30.00 | 30.00 | 30.00 | 30.00 |
| L-arginine | | | 0.24 | 0.48 | 0.96 |
| total (parts by weight) | | 240.30 | 240.54 | 240.78 | 241.26 |
| pH of dough before baking | | 6.64 | 6.94 | 6.95 | 7.59 |
| after baking | color fading inhibiting effect (n=5) | - | ○ | ○ | ○ |
| | comments | color is faded | green is maintained | green is maintained | green is maintained |
| after light irradiation | color fading inhibiting effect (n=5) | - | Δ | ○ | ○ |
| | comments | color is faded (whitened) | green is rather maintained | green is maintained | green is maintained |

| | | | | | |
|---|---|---|---|---|---|
| * The numerical value in the column corresponding to each component in the Table indicates the content (parts by weight) of the component, and the blank column corresponding to L-arginine indicates that L-arginine is not contained. ** The color fading inhibiting effect in the Table indicates the evaluation results by comparison with the degree of color fading of control cookie. | | | | | |

As shown in Table 13, the addition of 0.1 wt% to 0.4 wt% of L-arginine clearly inhibited the color fading of green of green powdered tea in the baked cookies.

Furthermore, the color fading of green of green powdered tea caused by exposure to light of 1,000 lux was somewhat inhibited by the addition of 0.1 wt% of L-arginine, and was clearly inhibited by the addition of 0.2 wt% to 0.4 wt% of L-arginine.

The above-mentioned results of Experimental Example 11 suggest that the color fading inhibitor of the present invention can effectively inhibit color fading of green even when the chlorophyll-containing food is a baked product such as confectionery that contains a plant such as green powdered tea.

The results also suggest that the color fading inhibitor of the present invention may be effective in inhibiting color fading caused by exposure to light during storage of chlorophyll-containing foods.

### [Experimental Example 12] Study of effect of inhibiting color fading of hot air-dried chlorophyll-containing food

As described below, hot air-dried green onions were prepared as chlorophyll-containing food, and the color fading inhibiting effect of the color fading inhibitor of Example 1 of the present invention (L-arginine) was studied.

### (1) When hot air drying was performed after preparatory boiling

For each treatment group, 150 g of green onions were washed with water and cut with a knife to lengths of 5 mm to 10 mm. They were preparatorily boiled for 3 min at 90°C to 95°C in 600 g of water to which the color fading inhibitor of Example 1 had been added such that the L-arginine concentration was the concentration shown in Table 14. The green onions were then dried with hot air at 70°C and a wind speed of 2 m/sec to 3 m/sec for 2 hr to prepare hot air dried green onions. The control was a hot air dried green onion that had been prepared by preparatorily boiling and hot air drying in the same manner but without the addition of the color fading inhibitor of Example 1.

The hot air dried green onions prepared above were each rehydrated in hot water, and the effect of inhibiting color fading was evaluated by two panelists according to the following evaluation criteria.

### <Evaluation criteria>

○: color fading of the green onion is clearly inhibited compared to the control
Δ: color fading of green onion is slightly inhibited compared to the control
×: color fading of green onion is observed to the same extent as the control

In addition, using a photostability tester "LTL-200A5-15WCD" (Nagano Science Co., Ltd.) (light source: white fluorescent lamp "straight tube rapid start type 20 type"), each hot air dried product was stored at 25°C under 1,000 lux of light irradiation for one week or one month, and then the effect of inhibiting color fading was evaluated in the same manner as described above. The evaluation results, determined by discussion between the two, are also shown in Table 14.

**[Table 14]**

| L-arginine addition concentration (wt%) during preparatory boiling treatment | weight (g) of cut green onion | water (g) for preparatory boiling treatment | L-arginine amount added (g) | loss on drying (wt%) | pH (25°C) of aqueous solution used for preparatory boiling treatment | color fading inhibiting effect | color fading inhibiting effect after light irradiation | |
|---|---|---|---|---|---|---|---|---|
| | | | | | | | 1 week | 1 month |
| 0 | 150 | 600 | 0 | 5.1 | 6.35 | control | control | control |
| 0.03 | 150 | 600 | 0.18 | 5.5 | 6.63 | ○ | - | - |
| 0.04 | 150 | 600 | 0.24 | 4.8 | 6.82 | ○ | - | - |
| 0.05 | 150 | 600 | 0.30 | 5.0 | 6.99 | ○ | ○ | ○ |
| 0.075 | 150 | 600 | 0.45 | 5.2 | 7.17 | ○ | ○ | ○ |
| 0.10 | 150 | 600 | 0.60 | 5.2 | 7.43 | ○ | ○ | ○ |
| 0.15 | 150 | 600 | 0.90 | 6.3 | 7.76 | ○ | ○ | ○ |
| 0.20 | 150 | 600 | 1.20 | 5.8 | 7.92 | ○ | ○ | ○ |
| 0.30 | 150 | 600 | 1.80 | 5.9 | 8.28 | ○ | ○ | ○ |

| | | | | | | | | |
|---|---|---|---|---|---|---|---|---|
| *; In Table, "-" means that the evaluation was not performed. ** The color fading inhibiting effect in the Table indicates the evaluation results by comparison with the degree of color fading of hot air dried green onion product in the control. | | | | | | | | |

As shown in Table 14, when the concentration of L-arginine added during the preparatory boiling process was 0.03 wt% to 0.30 wt%, the effect of inhibiting color fading of green onions in the hot air dried products was observed.

Furthermore, in hot air dried green onions where the L-arginine concentration during preparatory boiling was between 0.05 wt% and 0.30 wt%, an inhibitory effect against color fading due to exposure to light during storage was confirmed.

When the L-arginine concentration during preparatory boiling was 0.30 wt%, the pH of the aqueous solution used for the preparatory boiling was 8.28. Considering the results of above-mentioned Experimental Example 2, it is presumed that a similar color fading inhibitory effect would be obtained even if the pH of the aqueous solution was adjusted to less than 8.

### (2) Hot air drying performed after immersion treatment

For each treatment group, 150 g of green onions were washed with water and cut into lengths of 5 mm to 10 mm with a knife. They were then immersed for 30 min at room temperature in 600 g of water to which the color fading inhibitor of Example 1 had been added such that the L-arginine concentration was the concentration shown in Table 15. The green onions were then dried with hot air at 70°C and a wind speed of 2 m/sec to 3 m/sec for 2 hr to prepare hot air dried green onions. The control was a hot air dried green onion product prepared by immersing the green onions in water without the color fading inhibitor of Example 1 and drying them in hot air in the same manner.

After rehydrating the green onions prepared above with hot water, two panelists evaluated the effect of inhibiting color fading in the same manner as above, and the evaluation results decided by discussion between the two are also shown in Table 15.

**[Table 15]**

| L-arginine addition concentration (wt%) during immersion treatment | weight (g) of cut green onion | water (g) for preparatory boiling treatment | L-arginine amount added (g) | loss on drying (wt%) | pH (25°C) of aqueous solution used for immersion treatment | color fading inhibiting effect |
|---|---|---|---|---|---|---|
| 0 | 150 | 600 | 0 | 7.1 | 6.71 | control |
| 0.03 | 150 | 600 | 0.18 | 7.4 | 6.52 | × |
| 0.04 | 150 | 600 | 0.24 | 6.3 | 6.54 | × |
| 0.05 | 150 | 600 | 0.30 | 7.4 | 6.66 | × |
| 0.075 | 150 | 600 | 0.45 | 6.5 | 6.91 | × |
| 0.10 | 150 | 600 | 0.60 | 7.1 | 7.08 | Δ |
| 0.15 | 150 | 600 | 0.90 | 7.2 | 7.70 | ○ |
| 0.20 | 150 | 600 | 1.20 | 6.8 | 7.74 | ○ |
| 0.30 | 150 | 600 | 1.80 | 7.4 | 8.68 | ○ |

| | | | | | | |
|---|---|---|---|---|---|---|
| * The color fading inhibiting effect in the Table indicates the evaluation results by comparison with the degree of color fading of hot air dried green onion product in the control. | | | | | | |

As shown in Table 15, when immersed in an L-arginine aqueous solution at room temperature, immersion in a 0.10 wt% L-arginine aqueous solution slightly inhibited color fading in heat-dried green onions, and immersion in a 0.15 wt% to 0.30 wt% L-arginine aqueous solution clearly inhibited color fading in heat-dried green onions.

When the L-arginine concentration during immersion was 0.30 wt%, the pH of the aqueous solution used for immersion was 8.68, but considering the results of Experimental Example 2 above, it is presumed that a similar color fading inhibiting effect would be obtained even if the pH of the aqueous solution was adjusted to less than 8.

### [Experimental Example 13] Evaluation of effect of inhibiting color fading using standard paint colors

30 g of Japanese mustard spinach was immersed in 60 g of water to which 0.20 wt% of the color fading inhibitor of Example 1 (L-arginine) had been added, which was then filled into a pouch, sealed, and heated in a hot water bath at 98°C for 60 min. As a control, 30 g of Japanese mustard spinach was immersed in 60 g of water without the color fading inhibitor of Example 1, which was then filled into a pouch, sealed, and heated in the same manner.

Four panelists observed the color tone of the Japanese mustard spinach that had been cooled after heating, and selected a color chart from standard paint colors (issued by the Japan Paint Manufacturers Association) that corresponded to the color tone of the Japanese mustard spinach that had been immersed in water containing the color fading inhibitor of Example 1 and heated, and the control Japanese mustard spinach. The results are shown in Table 16.

**[Table 16]**

| sample | number of selected color chart |
|---|---|
| control | L22-30D |
| Example 1 | L42-40P |

As shown in Table 16, the color tone of the control Japanese mustard spinach after heating and cooling was evaluated to correspond to color chart number = L22-30D (2.5Y3/2 in the Munsell color system), and significant fading of the green color of the Japanese mustard spinach was observed.

On the other hand, the color tone of the Japanese mustard spinach immersed in the aqueous solution containing the fading inhibitor of Example 1 after heating and cooling was evaluated to correspond to color chart number = L42-40P (2.5G4/8 in the Munsell color system), and it was observed that a fairly vivid green color was maintained even after heating.

### [Experimental Example 14] Effect of inhibiting color fading due to light in green tea beverages filled in PET bottles

3.6 parts by weight of tea leaves (deep steamed tea from Shizuoka Prefecture, Arahataen Co., Ltd.) were placed in a tea bag (unbleached type, large size, Zenmi Co., Ltd.), 96.4 parts by weight of ion-exchanged water was added, extracted at 50°C for 8 min, and the green tea extract obtained by filtration was diluted 4.5 times with ion-exchanged water to prepare a diluted green tea extract. 0.1 parts by weight of green powdered tea (commercial green powdered tea from Uji, Kyoto, Kanei Ichigo Tea Co., Ltd.), 0.12 parts by weight of the fading inhibitor of Example 1 (L-arginine), and 0.10 parts by weight of ascorbic acid were added to 100 parts by weight of the said diluted green tea extract, which was then sterilized at ultra-high temperature of 135°C for 30 sec, aseptically filled into a sterilized 500 mL PET bottle, and cooled.

The green tea beverage prepared above was stored for 10 days at 25°C under 1,000 lux of light irradiation in a photostability tester "LTL-200A5-15WCD" (Nagano Science Co., Ltd.) (light source: white fluorescent lamp "straight tube rapid start type 20 type").

A control was prepared by adding green powdered tea to a diluted solution of green tea extract, filling it into a 500 mL PET bottle, similarly subjecting it to ultra-high temperature sterilization and aseptic filling, and storing it under light irradiation.

The fading inhibiting effect of the green tea beverage after ultra-high temperature sterilization and aseptic filling, and after further storage under light irradiation for 10 days, was evaluated by 10 panelists according to the following evaluation criteria, and the evaluation results decided by discussion among the 10 panelists are shown in Table 17 together with comments from the panelists.

### <Evaluation criteria>

⊙: color fading is remarkably inhibited compared to the control
○: color fading is clearly inhibited compared to the control
Δ: color fading is slightly inhibited compared to the control
×: color fading is observed to the same extent as in the control

**[Table 17]**

| component | | control | sample |
|---|---|---|---|
| green tea extract diluted solution | | 100.00 | 100.00 |
| green powdered tea | | 0.10 | 0.10 |
| ascorbic acid | | | 0.10 |
| L-arginine | | | 0.12 |
| total (parts by weight) | | 100.10 | 100.32 |
| pH | | 5.98 | 6.75 |
| color fading inhibiting effect | after ultra-high temperature sterilizing and aseptic filling | - | Δ |
| | after ultra-high temperature sterilizing, aseptic filling and storage under light exposure | - | ○ |
| comments | after ultra-high temperature sterilizing and aseptic filling | color fading is observed | color fading is somewhat inhibited |
| | after ultra-high temperature sterilizing, aseptic filling and storage under light exposure | color fading is remarkably observed | green is somewhat maintained |

| | | | |
|---|---|---|---|
| * The numerical value in the column corresponding to each component in the Table indicates the content (parts by weight) of the component, and the blank column corresponding to each component indicates that the component is not contained. ** The color fading inhibiting effect in the Table indicates the evaluation results by comparison with the degree of color fading in the control. | | | |

As shown in Table 17, it was confirmed that the addition of the color fading inhibitor of Example 1 to green tea beverages filled in PET bottles clearly inhibited the color fading of green after ultra-high temperature sterilization, and further when they were stored under light exposure.

The pH of the green tea beverage used as sample and the control green tea beverage after ultra-high temperature sterilization, aseptic filling, and cooling was 6.75 and 5.98 at 25°C, respectively.

### [Industrial Applicability]

As described above in detail, the present invention can provide a color fading inhibitor for chlorophyll-containing foods. The color fading inhibitor for chlorophyll-containing foods of the present invention can be suitably used for processing involving heating under acidic to neutral conditions, and for processing under acidic conditions that does not involve heating.

The present invention can also provide a method for inhibiting the color fading of chlorophyll-containing foods. The method for inhibiting color fading of chlorophyll-containing foods of the present invention can be suitably applied to processing that involves heating under acidic to neutral conditions, as well as processing under acidic conditions that does not involve heating.

Furthermore, the present invention can provide a method for producing a processed product of a chlorophyll-containing food in which color fading is inhibited.

The color fading inhibitor for chlorophyll-containing foods, the method for inhibiting color fading of chlorophyll-containing foods, and the method for producing processed products of chlorophyll-containing foods in which color fading is inhibited, of the present invention can inhibit color fading of chlorophyll-containing foods well when processing involving heating under acidic to neutral conditions and processing under acidic conditions that does not involve heating are performed, and can provide a chlorophyll-containing food that retains a bright green color, and a processed product thereof.

Furthermore, in a processed product of a chlorophyll-containing food provided by the present invention, color fading due to light exposure during storage can be inhibited well.

This application is based on a patent application No. 2022-060753 filed in Japan, the contents of which are incorporated in full herein.

## Claims

1. A color fading inhibitor for chlorophyll-containing foods, which color fading inhibitor is for processing involving heating under acidic to neutral conditions or processing under acidic conditions that does not involve heating, and comprises arginine or a salt thereof.

2. The color fading inhibitor according to claim 1, which is added to water or a seasoning liquid used when heating chlorophyll-containing foods, or a treatment liquid used when pretreating chlorophyll-containing foods prior to heating, or a treatment liquid or a seasoning liquid used when processing under acidic conditions that does not involve heating.

3. The color fading inhibitor according to claim 2, wherein arginine or a salt thereof is added to water or a seasoning liquid used when heating chlorophyll-containing foods, or a treatment liquid used when pretreating chlorophyll-containing foods prior to heating, such that the content thereof is 0.01 wt% or more and 1 wt% or less.

4. The color fading inhibitor according to claim 2, wherein arginine or a salt thereof is added to a treatment liquid or a seasoning liquid used when processing under acidic conditions that does not involve heating, such that the content thereof is 0.01 wt% or more and 11 wt% or less.

5. A method for inhibiting color fading of a chlorophyll-containing food when processing involving heating under acidic to neutral conditions is performed or processing under acidic conditions that does not involve heating is performed, comprising contacting a solution containing arginine or a salt thereof with the chlorophyll-containing food.

6. The inhibiting method according to claim 5, wherein the solution containing arginine or a salt thereof is prepared by adding and dissolving arginine or a salt thereof in water or a seasoning liquid used when heating chlorophyll-containing foods, or a treatment liquid used when pretreating chlorophyll-containing foods prior to heating at 0.01 wt% or more and 1 wt% or less.

7. The inhibiting method according to claim 5, wherein the solution containing arginine or a salt thereof is prepared by adding and dissolving arginine or a salt thereof in a treatment liquid or a seasoning liquid used when processing under acidic conditions that does not involve heating at 0.01 wt% or more and 11 wt% or less.

8. The inhibiting method according to claim 5 or 6, wherein the processing involving heating is performed with the solution containing arginine or a salt thereof in contact with the chlorophyll-containing food.

9. The inhibiting method according to claim 5 or 7, wherein the processing under acidic conditions that does not involve heating is performed with the solution containing arginine or a salt thereof in contact with the chlorophyll-containing food.

10. A method for producing a processed product of a chlorophyll-containing food in which color fading is inhibited, comprising contacting a solution containing arginine or a salt thereof with the chlorophyll-containing food and subjecting the chlorophyll-containing food to processing involving heating under acidic to neutral conditions or processing under acidic conditions that does not involve heating.

11. The production method according to claim 10, wherein the solution containing arginine or a salt thereof is prepared by adding and dissolving arginine or a salt thereof in water or a seasoning liquid used when heating chlorophyll-containing foods, or a treatment liquid used when pretreating chlorophyll-containing foods prior to heating at 0.01 wt% or more and 1 wt% or less.

12. The production method according to claim 10, wherein the solution containing arginine or a salt thereof is prepared by adding and dissolving arginine or a salt thereof in a treatment liquid or a seasoning liquid used when processing under acidic conditions that does not involve heating at 0.01 wt% or more and 11 wt% or less.

13. The production method according to claim 10 or 11, wherein the solution containing arginine or a salt thereof is subjected to the processing involving heating under acidic to neutral conditions while in contact with the chlorophyll-containing food.

14. The production method according to claim 10 or 12, wherein the solution containing arginine or a salt thereof is subjected to the processing under acidic conditions that does not involve heating while in contact with the chlorophyll-containing food.
